(19)

Europäisches
Patentamt
European
Patent Office
Office européen
des brevets

(11) **EP 2 966 610 A1**

(12) **EUROPEAN PATENT APPLICATION**
published in accordance with Art. 153(4) EPC

(43) Date of publication:
**13.01.2016 Bulletin 2016/02**

(21) Application number: **13824086.6**

(22) Date of filing: **24.12.2013**

(51) Int Cl.:
*G06Q 50/06* (2012.01)      *G06Q 10/00* (2012.01)
*H02J 3/32* (2006.01)       *H02J 13/00* (2006.01)

(86) International application number:
**PCT/JP2013/084464**

(87) International publication number:
**WO 2014/136362 (12.09.2014 Gazette 2014/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.03.2013   JP 2013046782**

(71) Applicant: **Kabushiki Kaisha Toshiba
Minato-ku
Tokyo 105-8001 (JP)**

(72) Inventors:
• **KUBOTA, Kazuto
  Tokyo 105-8001 (JP)**
• **KATAYAMA, Kyosuke
  Tokyo 105-8001 (JP)**

• **MATSUE, Kiyotaka
  Tokyo 105-8001 (JP)**
• **SUYAMA, Akihiro
  Tokyo 105-8001 (JP)**
• **WADA, Takahisa
  Tokyo 105-8001 (JP)**
• **TANIMOTO, Tomohiko
  Tokyo 105-8001 (JP)**
• **TAIRA, Hiroshi
  Tokyo 105-8001 (JP)**

(74) Representative: **Moreland, David et al
Marks & Clerk LLP
Aurora
120 Bothwell Street
Glasgow G2 7JS (GB)**

(54) **ENERGY MANAGEMENT SYSTEM, ENERGY MANAGEMENT METHOD, AND PROGRAM**

(57)    According to an embodiment, an energy management system manages energy of a customer, including a power generation device configured to generate power derived from renewable energy and a battery device capable of being charged and discharged. The energy management system includes an estimation unit, a creation unit, and a control unit. The estimation unit estimates the demand of the energy of the customer to obtain a demand estimated value, and estimates the power generation amount of the power generation device to obtain a power generation amount estimated value. The creation unit creates the charge and discharge schedule of the battery device, which can minimize an electricity purchase cost using the push up effect of an electricity selling profit by discharge of the battery device, based on the demand estimated value and the power generation amount estimated value. The control unit controls the battery device based on the charge and discharge schedule.

FIG. 8

EP 2 966 610 A1

**Description**

Technical Field

Embodiments described herein relate generally to a technique of managing the energy balance of a customer such as a home.

Background Art

A lot of demonstrations and experiments associated with smart energy management have been conducted against the background of recently increasing awareness of environmental preservation and anxiety about shortages in the supply of electricity. An example is an experiment of demand response using an electricity rate system (real time pricing) that changes the electricity rate depending on the time zone.

A HEMS (Home Energy Management System) has also received a great deal of attention. The HEMS can connect distributed power supplies (to be generically referred to as new energy devices hereinafter) such as a PV (PhotoVoltaic power generation) unit, a battery device, and an FC (Fuel Cell) and existing household electric appliances to a network and collectively manage them. A patent application has been made for a related art (Japanese Patent Application No. 2012-255301).

Citation List

Patent Literatures

    Patent Literature 1: Jpn. Pat. Appln. KOKAI Publication No. 2011-72166
    Patent Literature 2: Jpn. Pat. Appln. KOKAI Publication No. 2011-92002

Summary of Invention

Technical Problem

In Japan, the FIT (Feed-In Tariff) scheme for renewable energy took effect on July 1, 2012. Under this scheme, a customer who makes an agreement on double power generation with an electric company can increase the sold electricity amount derived from a PV system by covering the energy demand at the time of PV power generation by discharge of a battery device. Double power generation is a form in which a private power generation facility or the like (battery device or the like) is installed in addition to the PV system. That is, in the double power generation mode, the sold electricity amount push up effect can be expected by discharging the private power generation facility or the like.

To pursue reduction of the heat and electricity cost under this condition, a charge and discharge strategy considering the push up effect needs to be obtained for the battery device. To create the charge and discharge strategy, the estimated values of the energy demand and the PV power generation amount of the customer and the like need to be taken into consideration. In many cases, however, the estimated values and values (actual values) in an actual operation are different, and it may be impossible to reduce the heat and electricity cost as expected.

It is an object to provide an energy management system capable of operating a battery device under an advantageous charge and discharge strategy, an energy management method, and a program.

Solution to Problem

According to an aspect, an energy management system manages energy of a customer, including a power generation device configured to generate power derived from renewable energy and a battery device capable of being charged and discharged. The energy management system includes an estimation unit, a creation unit, and a control unit. The estimation unit estimates the demand of the energy of the customer to obtain a demand estimated value, and estimates the power generation amount of the power generation device to obtain a power generation amount estimated value. The creation unit creates the charge and discharge schedule of the battery device, which can minimize an electricity purchase cost using the push up effect of an electricity selling profit by discharge of the battery device, based on the demand estimated value and the power generation amount estimated value. The control unit controls the battery device based on the charge and discharge schedule.

Brief Description of Drawings

[FIG. 1] FIG. 1 is a view showing an example of a system according to an embodiment.
[FIG. 2] FIG. 2 is a view showing an example of an energy management system according to the embodiment.
[FIG. 3] FIG. 3 is a functional block diagram showing an example of a home server 7.
[FIG. 4] FIG. 4 is a functional block diagram showing an example of a scheduler 73.
[FIG. 5] FIG. 5 is a view showing an example of a charge and discharge value table 4a.
[FIG. 6] FIG. 6 is a view showing an example of a charge and discharge amount table 4b.
[FIG. 7] FIG. 7 is a block diagram showing an example of the hardware blocks of the home server 7.
[FIG. 8] FIG. 8 is a flowchart showing an example of a processing procedure of creating the charge and discharge schedule of a storage battery system 102.
[FIG. 9] FIG. 9 is a view for explaining an algorithm that applies a branch and bound method to a 3-ary tree method.
[FIG. 10] FIG. 10 is a flowchart showing an example of a processing procedure of provisional solution calculation.
[FIG. 11A] FIG. 11A is a view showing an example of the relationship between an electricity rate and a charge period.
[FIG. 11B] FIG. 11B is a view showing an example of the charge schedule of the storage battery system 102.
[FIG. 12A] FIG. 12A is a graph showing an example of a PV estimated value PV(t).
[FIG. 12B] FIG. 12B is a graph showing an example of a demand estimated value D(t).
[FIG. 12C] FIG. 12C is a graph showing an example of an estimated value of a discharge value V(t).
[FIG. 13A] FIG. 13A is a table showing an example of an electricity tariff.
[FIG. 13B] FIG. 13B is a view showing an example of a PV surplus power purchase price.
[FIG. 14] FIG. 14 is a graph showing an example of the time series of Efficiency(t).
[FIG. 15] FIG. 15 is a graph showing an example of discharge on/off control of the storage battery system 102.
[FIG. 16] FIG. 16 is a block diagram showing an example of an energy management system according to the fourth embodiment.

Description of Embodiments

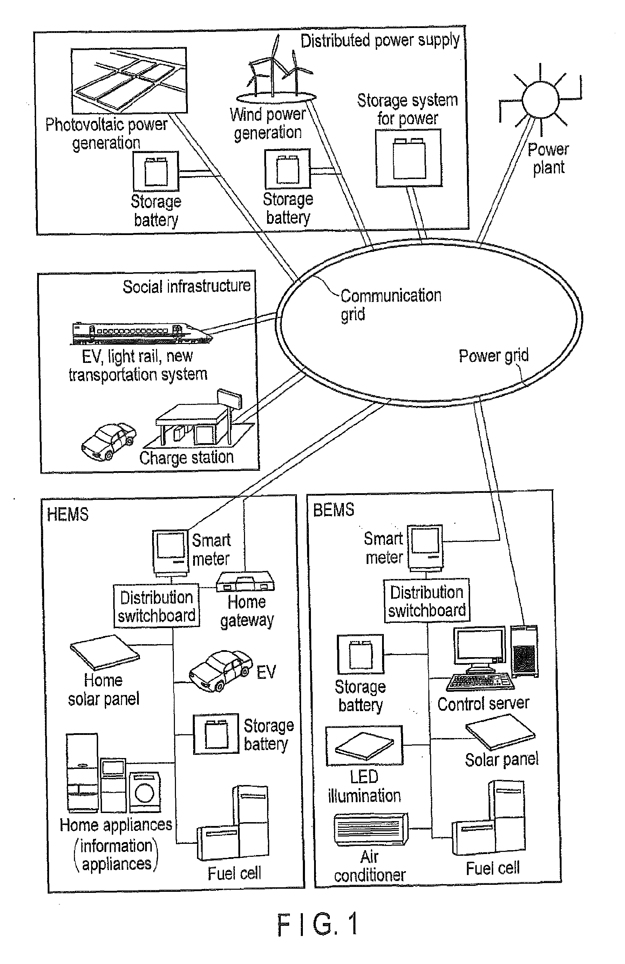

FIG. 1 is a view showing an example of a system according to an embodiment. FIG. 1 illustrates an example of a system known as a so-called smart grid. In an existing grid, existing power plants such as a nuclear power plant, a thermal power plant, and a hydroelectric power plant are connected to various customers such as an ordinary household, a building, and a factory via the grid. In the next-generation power grid, distributed power supplies such as a PV (PhotoVoltaic power generation) system and a wind power plant, battery devices, new transportation systems, charging stations, and the like are additionally connected to the power grid. The variety of elements can communicate via a communication grid.

Systems for managing energy are generically called EMSs (Energy Management Systems). EMSs are classified into several groups in accordance with the scale and the like. There are, for example, a HEMS (Home Energy Management System) for an ordinary household and a BEMS (Building Energy Management System) for a building. There also exist a MEMS (Mansion Energy Management System) for an apartment house, a CEMS (Community Energy Management System) for a community, and a FEMS (Factory Energy Management System) for a factory. Good energy optimization control is implemented by causing these systems to cooperate.

According to these systems, an advanced cooperative operation can be performed between the existing power plants, the distributed power supplies, the renewable energy sources such as sunlight and wind, and the customers. This makes it possible to produce a power supply service in a new and smart form, such as an energy supply system mainly using a natural energy or a customer participating-type energy supply/demand system by bidirectional cooperation of customers and companies.

[First Embodiment]

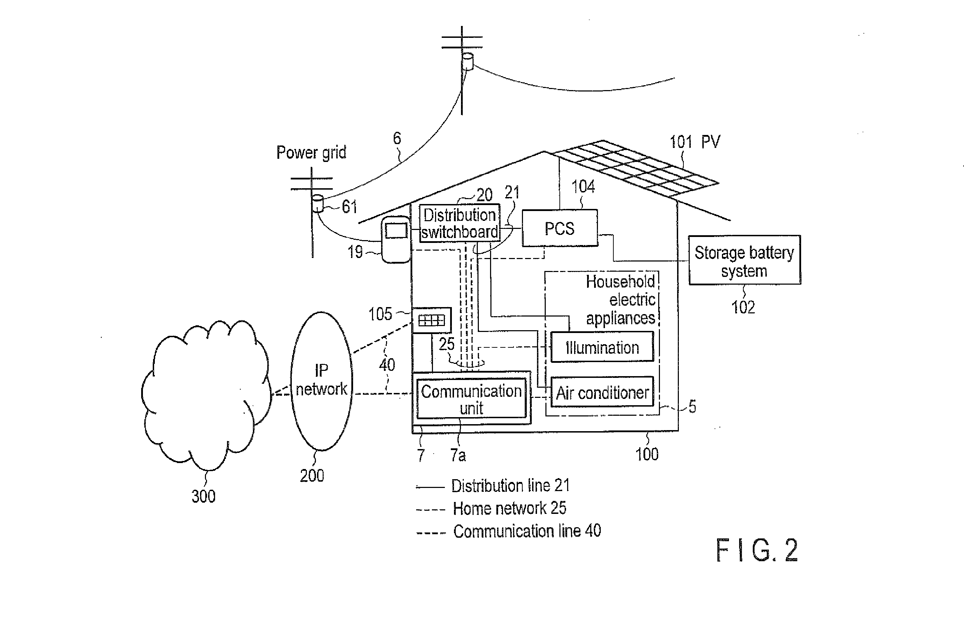

FIG. 2 is a view showing an example of an energy management system according to the first embodiment. A HEMS according to the embodiment includes a client system provided in a customer home 100, and a cloud computing system (to be referred to as a cloud hereinafter) 300 serving as a server system.

The client system includes a home server 7 installed in the home 100. The home server 7 can communicate with the cloud 300 via a communication line 40 on, for example, an IP network 200. The IP network 200 is, for example, the so-called Internet or a VPN (Virtual Private Network) of a system vendor. The home server 7 is a client apparatus capable of communicating with the cloud 300. The home server 7 transmits various kinds of data to the cloud 300, and receives various kinds of data from the cloud 300.

Referring to FIG. 2, power (AC voltage) supplied from a power grid 6 is distributed to households via, for example, a transformer 61, and supplied to a distribution switchboard 20 in the home 100 via a watt-hour meter (smart meter) 19. The watt-hour meter 19 has a function of measuring the power generation amount of an energy generation device provided in the home 100, the power consumption of the home 100, the electric energy supplied from the power grid 6, the amount of reverse power flow to the power grid 6, or the like. As is known, power generated based on renewable energy is permitted to flow back to the power grid 6.

The distribution switchboard 20 supplies, via distribution lines 21, power to household electric appliances (for example, lighting equipment, air conditioner, and heat pump water heater (HP)) 5 and a power conditioning system (PCS) 104 connected to the distribution switchboard 20. The distribution switchboard 20 also includes a measuring device for measuring the electric energy of each feeder.

The home 100 includes electrical apparatuses. The electrical apparatuses are apparatuses connectable to the distribution lines 21 in the home 100. An apparatus (load) that consumes power, an apparatus that generates power, an apparatus that consumes and generates power, and a storage battery correspond to the electrical apparatuses. That is, the household electric appliances 5, a PV unit 101, a storage battery system 102, and a fuel cell (to be referred to as an FC unit hereinafter) 103 correspond to the electrical apparatuses. The electrical apparatuses are detachably connected to the distribution lines 21 via sockets (not shown) and then connected to the distribution switchboard 20 via the distribution lines 21.

The PV unit 101 is installed on the roof or wall of the home 100. The PV unit 101 is an energy generation apparatus that produces electric energy from renewable energy. A wind power generation system or the like also belongs to the category of energy generation apparatuses. If surplus power derived from renewable energy occurs, the surplus power can be sold to the power grid 6.

The storage battery system 102 converts AC power from the power grid 6 or the distribution line 21 into DC power and accumulates it. If there is a necessity to cover the demand of the customer, the power accumulated in the storage battery system 102 is converted into AC power and supplied to the distribution line 21.

The PCS 104 includes a converter (not shown). The PCS 104 converts AC power from the distribution lines 21 into DC power and supplies it to the storage battery system 102. The PCS 104 also includes an inverter (not shown). The PCS 104 converts DC power supplied from the PV unit 101 or the storage battery system 102 into AC power and supplies it to the distribution lines 21. The electrical apparatuses can thus receive power supplied from the PV unit 101 or the storage battery system 102 as well.

That is, the PCS 104 has the function of a power converter configured to transfer energy between the distribution lines 21 and the PV unit 101 or the storage battery system 102. The PCS 104 also has a function of controlling to stably operate the storage battery system 102. Note that FIG. 2 illustrates a form in which the PCS 104 is commonly connected to the PV unit 101 and the storage battery system 102. In place of this form, the PV unit 101 and the storage battery system 102 may individually have the function of the PCS.

A home network 25 such as a LAN (Local Area Network) is formed in the home 100. The home server 7 is detachably connected to both the home network 25 and an IP network 200 via a connector (not shown) or the like. The home server 7 can thus communicate with the watt-hour meter 19, the distribution switchboard 20, the PCS 104, and the household electric appliances 5 connected to the home network 25. Note that the home network 25 is either wireless or wired.

The home server 7 includes a communication unit 7a as a processing function according to the embodiment. The communication unit 7a is a network interface that transmits various kinds of data to the cloud 300 and receives various kinds of data from the cloud 300.

The home server 7 is connected to a terminal 105 via a wired or wireless network. The functions of a local server can also be implemented by the home server 7 and the terminal 105. The terminal 105 can be, for example, a general-purpose portable information device, personal computer, or tablet terminal as well as a so-called touch panel.

The terminal 105 notifies the customer (user) of the operation state and power consumption of each of the household electric appliances 5, the PV unit 101, and the storage battery system 102 by, for example, displaying them on an LCD (Liquid Crystal Display) or using voice guidance. The terminal 105 includes an operation panel and accepts various kinds of operations and settings input by the customer or the user.

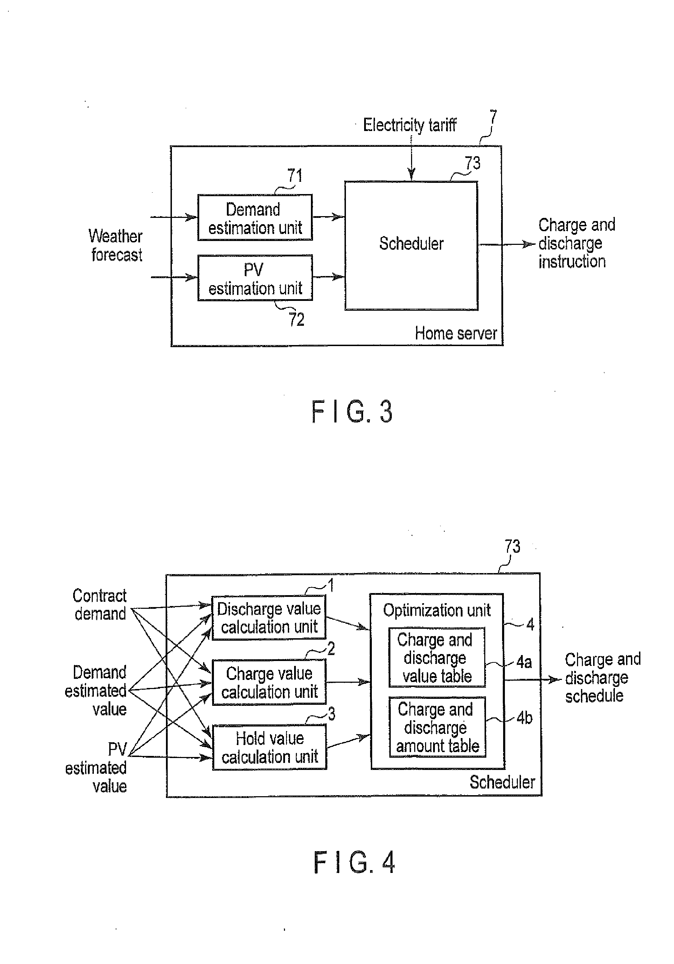

FIG. 3 is a functional block diagram showing an example of the home server 7. The home server 7 includes a demand estimation unit 71, a PV estimation unit 72, and a scheduler 73.

The demand estimation unit 71 estimates the demanded quantity of energy (to be referred to as a demand hereinafter) of the customer and obtains a demand estimated value. The demand estimation unit 71 estimates the demand of the next day using, for example, the past demand history of the home 100. The demand estimation of the next day can be obtained using, for example, the demand of the same day of the previous week.

Alternatively, the demand estimation unit 71 estimates the demand from a certain time of the estimation day of interest from the demand up to that time. To obtain the demand estimated value from the certain time of the day of interest, a demand curve similar to the demand curve up to that time is searched for from the past history. Then, the demand estimated value is obtained based on the matching curve from the time. The demand can be obtained by various methods other than the above-described one. The demand estimated value can be corrected using meteorological information or the like.

Let D(t) be the time series of the demand estimated value. In this case, t is a variable representing a time in one day. For example, when one day (reference period) is expressed as a set of minutes (unit periods), t takes a value of 0 to 1439.

The PV estimation unit 72 estimates power production (to be referred to as a power generation amount hereinafter) of the PV unit 101 and obtains the estimated value of the power generation amount (PV estimated value). The time series of the PV estimated value is represented by PV(t).

The PV estimated value can be calculated based on, for example, the past track record data value of the power generation amount or a weather forecast. For example, a method of estimating an amount of insolation from a weather forecast every three hours is described in literature Shimada & Kurokawa, 'Insolation Forecasting Using Weather Forecast with Weather Change Patterns', IEEJ Trans. PE, pp. 1219-1225, Vol. 127, No. 11, 2007.

The scheduler 73 creates the charge and discharge schedule of the storage battery system 102 based on the demand estimated value, PV estimated value, electricity tariff, and the like, and controls the storage battery system 102 based on the schedule. That is, the scheduler 73 generates a charge and discharge command to control the storage battery system 102 based on the calculated charge and discharge schedule. Based on the charge and discharge command, the storage battery system 102 is charged or discharged, or holds the charge amount at a predetermined value without charging or discharging.

FIG. 4 is a functional block diagram showing an example of the scheduler 73. The scheduler 73 includes a discharge value calculation unit 1, a charge value calculation unit 2, a hold value calculation unit 3, and an optimization unit 4.

The discharge value calculation unit 1 calculates the time series of a discharge value DisCHGval(t) based on the following equations (1) to (4).

[Mathematical 1]

$$PVovD(t) = PV(t) - D(t) \quad (PV(t) > D(t))$$
$$= 0 \qquad\qquad (PV(t) \leq D(t)) \qquad\qquad \cdots (1)$$

$$DovPV(t) = D(t) - PV(t) \quad (D(t) > PV(t))$$
$$= 0 \qquad\qquad (D(t) \leq PV(t)) \qquad\qquad \cdots (2)$$

$$PVpush(t) = \min(PV(t), D(t)) \qquad\qquad \cdots (3)$$

$$DisCHGval(t) = PVpush(t) \times PriceSell(t)$$
$$+ DovPV(t) \times PriceBuy(t) \qquad\qquad \cdots (4)$$

$PV_{OV}D(t)$ in equation (1) is a series that is the difference between the PV estimated value PV(t) and the demand estimated value D(t) in a case in which the former exceeds the latter or 0 when the former is equal to or smaller than the latter.

$D_{OV}PV(t)$ in equation (2) is a series that is the difference between the demand estimated value D(t) and the PV estimated value PV(t) in a case in which the former exceeds the latter or 0 when the former is equal to or smaller than the latter.

PVpush(t) in equation (3) is the smaller one of PV(t) and D(t). PVpush(t) indicates the series of the power generation amount capable of pushing up the sold PV power amount by covering the demand estimated value D(t) by discharged power of the storage battery system 102.

The discharge value DisCHGval(t) is given by equation (4). In equation (4), PriceBuy(t) is the electricity rate at the time t, and PriceSell(t) is the PV purchase price at the time t.

The first term of the right-hand side of equation (4) represents the purchase price of the pushed up PV power generation amount, and indicates the estimated value of the electricity selling profit based on the power generation amount of the PV unit 101. The second term of the right-hand side indicates the cancel amount of the electricity purchase loss when the demand estimated value is covered by discharge of the storage battery system 102. The discharge value DisCHGval(t) indicates a value obtained by discharge in D(t) at the time t.

The charge value calculation unit 2 calculates the time series of a charge value CHGval(t) based on the following equations (5) to (8).

[Mathematical 2]

$$PVovD(t) = PV(t) - D(t) \quad (PV(t) > D(t))$$
$$= 0 \qquad (PV(t) \leqq D(t)) \qquad \cdots(5)$$

$$DovPV(t) = D(t) - PV(t) \quad (D(t) > PV(t))$$
$$= 0 \qquad (D(t) \leqq PV(t)) \qquad \cdots(6)$$

$$CHGamount(t) = Limit - DovPV(t) \qquad \cdots(7)$$

$$CHGval(t) = PVovD(t) \times PriceSell(t)$$
$$+ CHGamount(t) \times PriceBuy(t) \qquad \cdots(8)$$

Equations (5) and (6) are the same as equations (1) and (2). CHGamount(t) in equation (7) is the time series of power that can be accumulated from the power grid 6 in the storage battery system 102. Note that the upper limit of the contract demand to the power grid 6 is represented by Limit.

The charge value CHGval(t) is given by equation (8). CHGval(t) is represented as the sum of the value paid for charge in CHGamount(t) at the time t and a loss that occurs when the PV power generation amount that can be sold becomes 0.

The hold value calculation unit 3 calculates the time series of an electricity rate Val(t) when the charge and discharge function of the storage battery system 102 is not used based on equations (9) to (11). Val(t) will be referred to as a hold value hereinafter.

[Mathematical 3]

$$PVovD(t) = PV(t) - D(t) \quad (PV(t) > D(t))$$
$$= 0 \qquad (PV(t) \leqq D(t)) \qquad \cdots(9)$$

$$DovPV(t) = D(t) - PV(t) \quad (D(t) > PV(t))$$
$$= 0 \qquad (D(t) \leqq PV(t)) \qquad \cdots(10)$$

$$Val(t) = PVovD(t) \times PriceSell(t)$$
$$+ DovPV(t) \times PriceBuy(t) \qquad \cdots(11)$$

Equations (9) and (10) are the same as equations (1) and (2). The hold value Val(t) in equation (11) represents the balance of electricity rate when the storage battery system 102 is neither charged nor discharged, that is, the state of charge is held.

The optimization unit 4 creates the charge and discharge schedule of the storage battery system 102 based on the calculated discharge value, charge value, and hold value and the charge amount and discharge amount of the storage battery system 102. The optimization unit 4 stores a charge and discharge value table 4a and a charge and discharge amount table 4b in a memory (not shown) or the like.

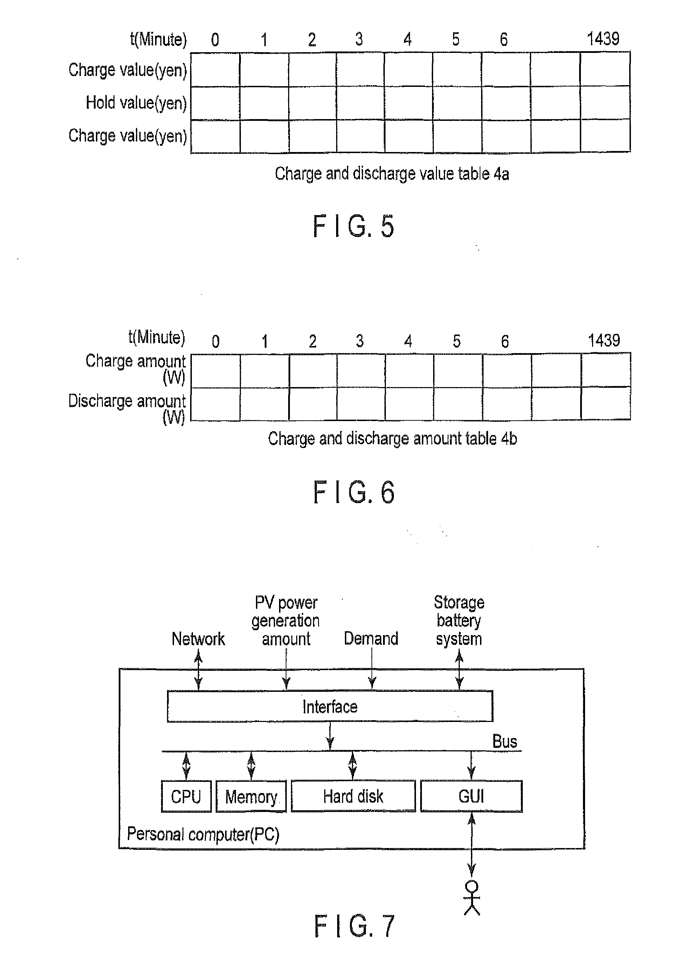

FIG. 5 is a view showing an example of the charge and discharge value table 4a. The charge and discharge value table 4a describes the calculated discharge value, charge value, and hold value for, for example, each time in a day.

FIG. 6 is a view showing an example of the charge and discharge amount table 4b. The charge and discharge amount table 4b describes the charge and discharge amounts when charge and discharge are executed for each time. In the tables shown in FIGS. 5 and 6, t = 0 corresponds to 0:00, and t = 1 corresponds to 0:01. When one day is expressed by minutes, t = 1439 corresponds to 23:59.

FIG. 7 is a block diagram showing an example of the hardware blocks of the home server 7. The home server 7 can be implemented using, for example, a general-purpose computer as basic hardware. The home server 7 is a computer including a CPU (Central Processing Unit) and a memory. The memory stores programs configured to control the computer.

The programs include instructions and the like to communicate with the cloud 300, calculate the operation schedules of the household electric appliances 5, the storage battery system 102, and the FC unit 103, request the cloud 300 to do these calculations, and reflect a customer's or user's intention on system control. The CPU functions based on various kinds of programs, thereby implementing various functions of the home server 7.

That is, the functional blocks of the home server 7 can be implemented by causing the CPU of the computer to execute the programs stored in the memory. The home server 7 can be implemented by installing the programs in the computer. Alternatively, the home server 7 may be implemented by storing the programs in a storage medium such as a CD-ROM or distributing the programs via a network and installing them in the computer.

As shown in FIG. 7, the computer includes the CPU, memory, hard disk, interface (IF), and graphic interface (GUI), which are connected to each other via a bus. The interface includes an interface used to measure the PV power generation amount and energy demand, an interface to the storage battery system 102, and an interface connected to the network. The programs that implement the functions of the home server 7 are stored on the hard disk, extracted on the memory at the time of execution, and then executed in accordance with a procedure.

In particular, the home server 7 may include a power conditioning system in addition to the functional blocks shown in FIG. 3. In this form, the home server 7 may be implemented as an embedded device and installed outdoors.

The function of the above-described arrangement will be described next. Optimizing the charge and discharge schedule of the storage battery system 102 will be examined. The charge and discharge schedule defines one of charge, discharge, and hold for each time. For example, in a case in which the charge and discharge schedule is set at one-minute intervals, one of charge, discharge, and hold is assigned every minute. However, the charge and discharge cannot be assigned at random because the lower limit and upper limit of the charge amount of the storage battery system 102 need to be met. An algorithm for assigning charge and discharge for each time will be explained based on this condition.

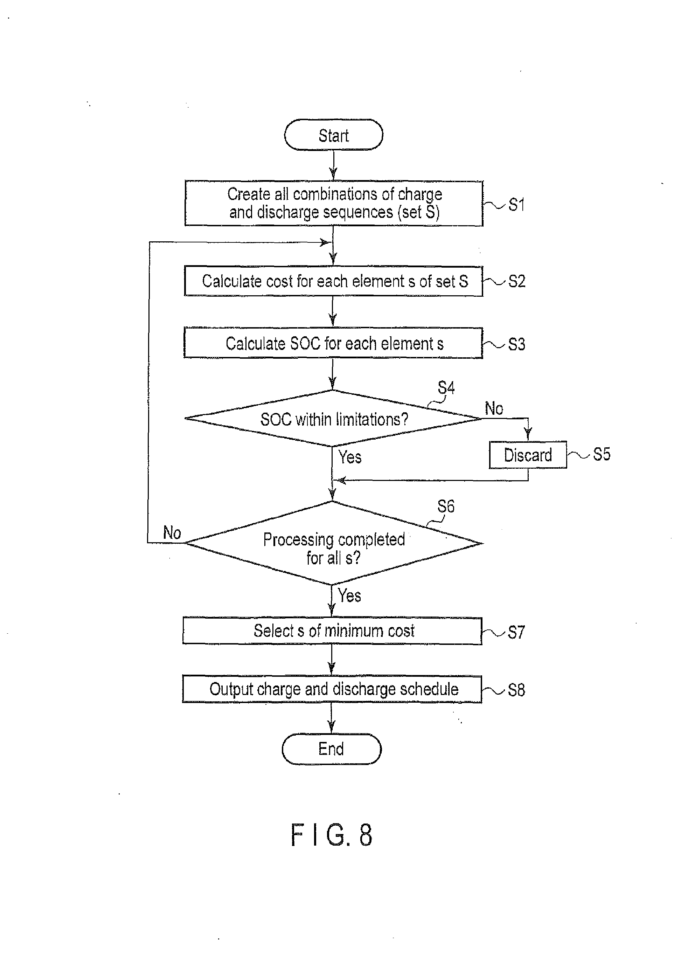

FIG. 8 is a flowchart showing an example of a processing procedure of creating the charge and discharge schedule of the storage battery system 102. The optimization unit 4 of the home server 7 will be described as the subject. First, the optimization unit 4 creates all combinations of charge and discharge sequences (step S1). More specifically, the optimization unit 4 creates, for all times, combinations in which one of charge, discharge, and hold is set at each time, and creates a set S having each combination as an element s.

Next, the optimization unit 4 sequentially extracts the element s from the set S, and calculates the cost (for example, heat and electricity cost) (step S2). When calculating the cost, the contents managed by the charge and discharge value table 4a and those managed by the charge and discharge amount table 4b are referred to. The optimization unit 4 calculates the SOC (State Of Charge) of the storage battery system 102 corresponding to each element s. The optimization unit 4 determines whether the calculated SOC falls between the upper limit and the lower limit of the capacity of the storage battery system 102 (step S4). If the SOC falls outside of the limitations (NO), the element s is regarded as unrealistic and discarded (step S5). The upper limit and lower limit of the capacity of the storage battery system 102 are limitations based on the specifications of the storage battery system 102.

The procedure of steps S2 to S5 is repeated for all elements s included in the set S (step S6). When the procedure is completed for all combinations, the optimization unit 4 selects an element having the minimum cost out of the elements remaining without being discarded (step S7). The optimization unit 4 outputs a charge and discharge schedule corresponding to the selected element s (step S8).

As described above, according to the first embodiment, parameters (charge value, discharge value, and hold value) representing the value of three states of charge, discharge, and hold assumed for the storage battery system 102 are calculated. In addition, the cost and SOC are calculated for all combinations of charge, discharge, and hold. A sequence of minimum cost is selected as the charge and discharge schedule out of the sequences whose SOC meets the limitations.

This makes it possible to create the charge and discharge schedule of the storage battery system 102, which is optimized in consideration of not only the discharge but also charge and a case in which neither charge nor discharge is performed. That is, depending on the weather condition, time zone, or unit price of electricity selling (electricity purchase), it is sometimes more advantageous in terms of cost when the is not used, or it is advantageous when charging is done intentionally.

In the first embodiment, it is possible to create a charge and discharge schedule comprehensively considering such a situation. That is, it is possible to create a schedule that can be expected to further reduce the cost when the charge and discharge of the storage battery system 102 are repeated. This makes it possible to provide an energy management system capable of operating a battery device under an advantageous charge and discharge strategy, an energy management method, and a program.

[Second Embodiment]

In the first embodiment, all combinations of charge and discharge sequences are listed, and a combination that meets the charge and discharge constraints and has the minimum cost is selected. However, since the number of combinations geometrically increases as the time intervals become finer, calculation may be unable to end within a practical time. In the second embodiment, an algorithm called a 3-ary tree (ternary search tree) is used to shorten the processing time. An optimization method based on this algorithm is represented by the following pseudo codes.

```
[Mathematical 4]

Function calc_price(t,act,soc):

    Calculate total soc when new_soc = act is executed at
  time t

      if soc does not meet upper and lower limits

        return (inf, act)

      if t = tmax  then:

        return (val( t, act ), act)

      else :

        (price["CHG"], actvec["CHG"]) = calc_price( t+1, "CHG
" , new_soc )

        (price["DIS"], actvec["DIS"]) = calc_price( t+1, "DIS
" , new_soc )

        (price["NON"], actvec["NON"]) = calc_price( t+1, "NON
" , new_soc )

      return ( min(price), argmin(price)+act[argmin(val)] )

Function val( t, act )

      return value when act is executed at time t
```

In this pseudo code sequence, calc_price is a function of calculating the cost when the charge and discharge strategy is executed in the time order and the SOC for each time. Character strings "CHG", "DIS", and "NON" indicate charge, discharge, and hold (neither charge nor discharge is performed), respectively. The function is described in the form of recursive call, and calc_price is called assuming a case in which charge, discharge, and hold are executed at the respective times. The return values are the sum of costs from the time of interest and the sequence of the charge and discharge strategy. If the time is tmax, the cost at the time tmax is calculated, and the return value is returned without recursively calling the function. val returns the value when act is executed at the time t. Note that the pseudo code sequence describes a sequence based on a breadth-first search method. A solution may be searched by a depth-first search.

In the first embodiment, one cost is calculated for a case of one minute. In the second embodiment, however, calculation is performed only once for the common portion from the top in a branch. That is, the optimum solution can be obtained without calculating all cases. It is therefore possible to greatly shorten the calculation time.

[Third Embodiment]

In the second embodiment, a solution is generated by the 3-ary tree method. In the third embodiment, a solution is searched by applying a branch and bound method to the 3-ary tree method. The algorithm will be described below.

```
[Mathematical 5]

Function calc_price(t,act,soc):

    Calculate optimum solution

    if provisional solution < optimum solution

        return (inf,act)

    Calculate total soc when new_soc = act is executed at time t

        if soc does not meet upper and lower limits

            return (inf, act)

        if t = tmax  then:

            return (val( t, act ), act)

        else :

            (price["CHG"], actvec["CHG"]) = calc_price( t+1, "CHG
" , new_soc )

            (price["DIS"], actvec["DIS"]) = calc_price( t+1, "DIS
" , new_soc )

            (price["NON"], actvec["NON"]) = calc_price( t+1, "NON
" , new_soc )

        return ( min(price), argmin(price)+act[argmin(val)] )

    Function val( t, act )

        return value when act is executed at time t
```

This algorithm adds processing of determining the magnitude relationship between the provisional solution and the optimum solution and reducing the solution search space based on the result to the algorithm of the second embodiment. This processing is called bounding.

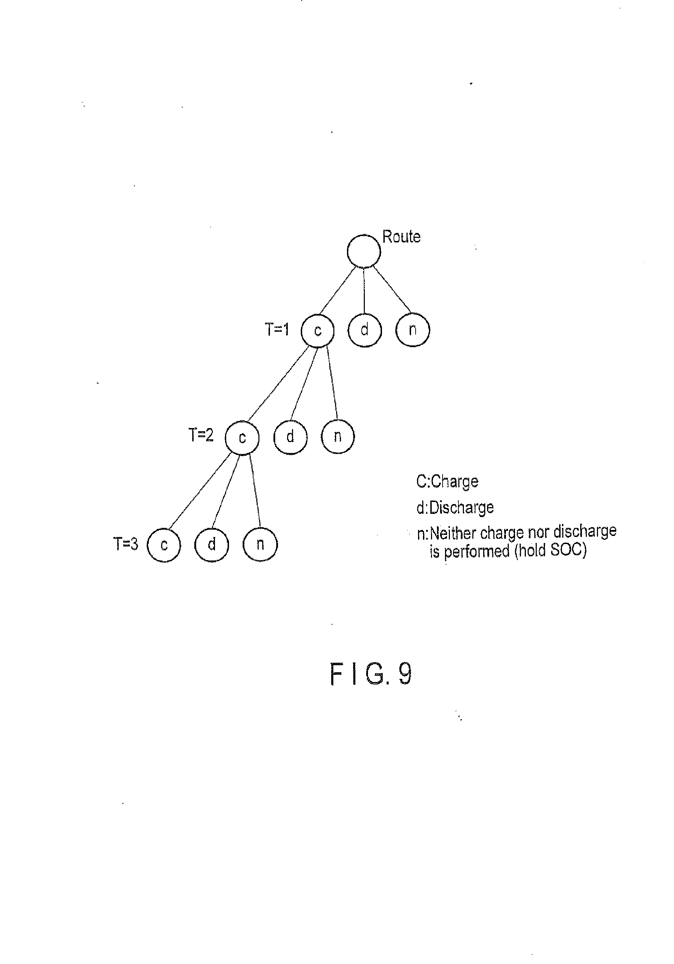

As shown in FIG. 9, the 3-ary tree method is an algorithm that connects three nodes to each node and calculates an evaluation value for each node. Let c be charge, d be discharge, and n be hold. As time T progresses, the number of nodes increases by the Tth power of 3. Hence, when a provisional solution is given to the algorithm, and execution of calculation is prohibited for more nodes than provisional solutions, the number of steps needed for the calculation can largely be decreased. When the bounding is added, the solution search space can be reduced, and the processing speed can be increased.

The optimum solution is calculated as the difference between an amount obtained when discharge is done up to the demand for all remaining times and an amount calculated assuming that charge is performed at the lowest price in the remaining time zone if the demand cannot be covered by the current value of the SOC.

The provisional solution is sequentially updated using the solution calculated by the algorithm. However, if the provisional solution close to the optimum solution cannot be calculated at an early stage, the number of steps in the solution search procedure increases, and a long calculation time is necessary. An example of a method of calculating the provisional solution closet to the optimum solution will be described below.

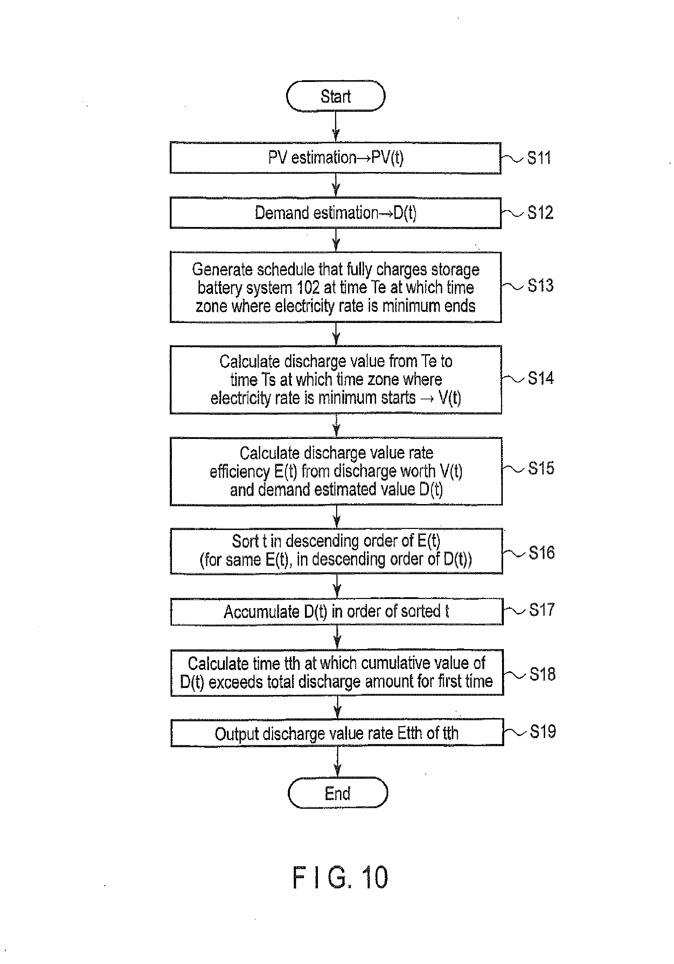

FIG. 10 is a flowchart showing an example of a processing procedure of provisional solution calculation. An optimization unit 4 of a home server 7 will be described as the subject. First, the optimization unit 4 calculates the estimated value of the PV power generation amount and obtains a time series PV(t) (step S11). The optimization unit 4 also calculates the demand estimated value and obtains a time series D(t) (step S12). t is a variable representing a time in one day. For example, when one day (reference period) is expressed as a set of minutes (unit periods), t takes a value of 0 to 1439.

Next, the optimization unit 4 creates the charge schedule of a storage battery system 102 (step S13). To minimize the electricity purchase loss, such a charge schedule that completes charge in a time as short as possible in a time zone where the electricity rate is low is obtained. Let Te be the end time of the time zone where the electricity rate is minimum. The optimization unit 4 generates a schedule that fully charges the storage battery system 102 at the time Te.

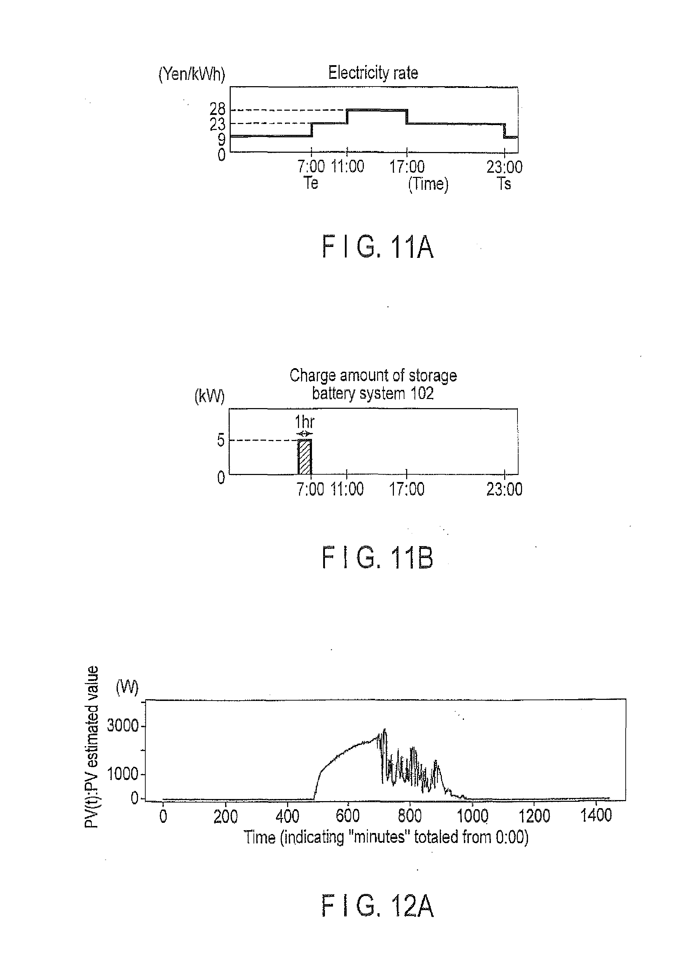

FIG. 11A is a view showing an example of the relationship between the electricity rate and the charge period. Referring to FIG. 11A, Te is 7:00 am. Assume that the storage battery system 102 before charge is empty, the battery capacity is 5 kWh, and the chargeable power is 5 kW. For example, as shown in FIG. 11B, a schedule to charge the storage battery system 102 by 5 kW during the period of 6:00 to 7:00 can be created.

Referring back to FIG. 10, the optimization unit 4 calculates the time series of a discharge value estimated value Value(t) (also referred to as V(t)) based on equations (12) to (15) (step S14). In the first embodiment, a time series from the time Te to a time Ts at which the time zone of the minimum electricity rate starts is calculated. That is, Value(t) in every minute as the unit period is calculated.

[Mathematical 6]

$$PVovD(t) = PV(t) - D(t) \quad (PV(t) > D(t))$$
$$= 0 \quad (PV(t) \leqq D(t)) \quad \cdots (12)$$

$$DovPV(t) = D(t) - PV(t) \quad (D(t) > PV(t))$$
$$= 0 \quad (D(t) \leqq PV(t)) \quad \cdots (13)$$

$$PVpush(t) = \min(PV(t), D(t)) \quad \cdots (14)$$

$$Value(t) = PVpush(t) \times PriceSell(t)$$
$$+ DovPV(t) \times PriceBuy(t) \quad \cdots (15)$$

Equations (12), (13), and (14) are the same as equations (1), (2), and (3). The right-hand side of equation (15) is the same as that of equation (4). That is, Value(t) indicates the value obtained when discharge is done in D(t) at the time t.

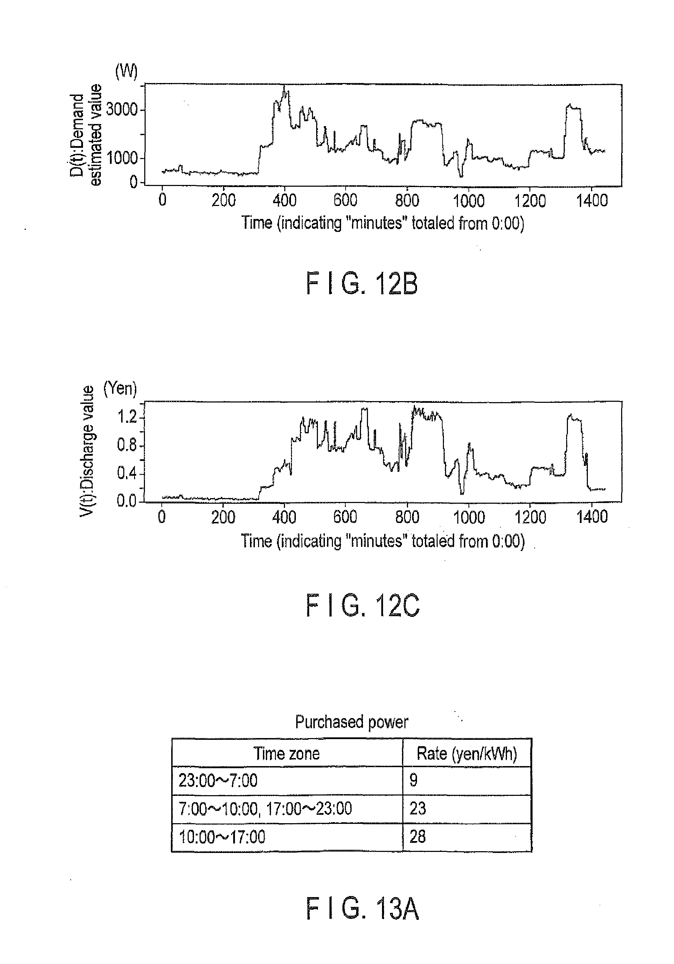

FIG. 12A is a graph showing an example of the PV estimated value PV(t). FIG. 12B is a graph showing an example of the demand estimated value D(t). FIG. 12C is a graph showing an example of the estimated value of the discharge value V(t). The estimated value of the discharge value V(t) is calculated from PV(t) and D(t) by equation (15). In the graphs of FIGS. 12A, 12B, and 12C, the abscissa represents the time indicating the accumulated value of "minutes" totaled from 0:00. The ordinate represents the value in each minute.

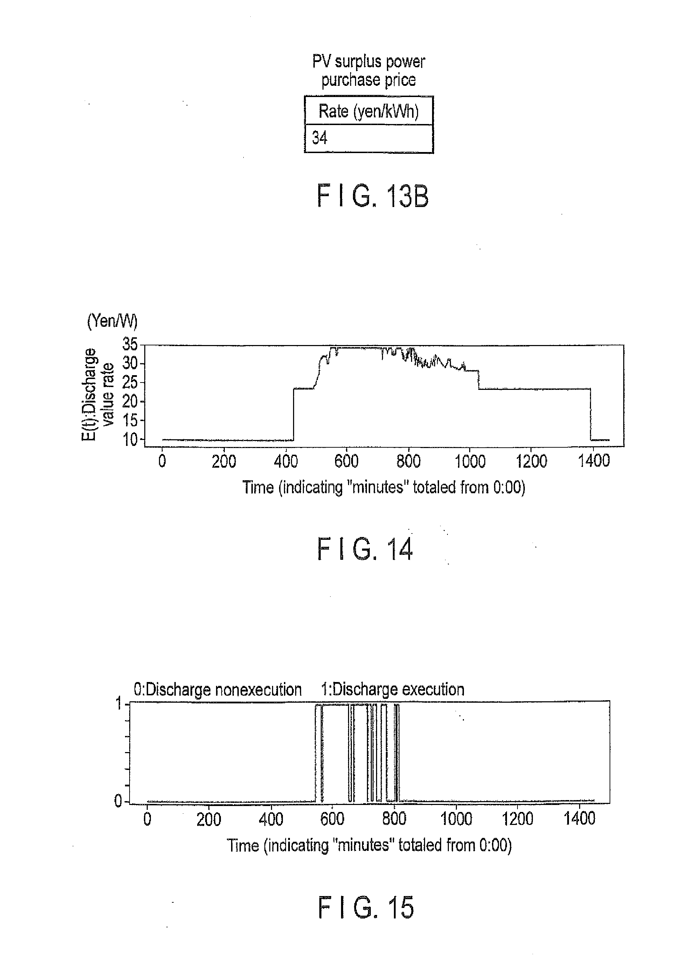

When calculating V(t) shown in FIG. 12C, for example, the value shown in FIG. 13A is used as Pricesell(t). In addition, for example, the value shown in FIG. 13B is used as PriceBuy(t). That is, the purchased power shown in FIG. 13A is PriceBuy(t), and the PV surplus power purchase price shown in FIG. 13B is Pricesell.

Referring back to FIG. 10, the optimization unit 4 calculates the time series of a discharge value rate Efficiency(t) (also referred to as E(t)) from the discharge value V(t) and the demand D(t) based on equation (16) (step S15). That is, Efficiency(t) is a value obtained by dividing Value(t) by the demand estimated value.

[Mathematical 7]

$$Efficiency(t) = Value(t)/D(t) \qquad \cdots (16)$$

FIG. 14 is a graph showing an example of the time series of Efficiency(t). The graph of FIG. 14 indicates Efficiency(t) from Te (7:00) to Ts (23:00). For example, the value Efficiency(t) near 600 min (10:00) is larger than those after 1,000 min (16:40). Hence, a high efficiency can be obtained by discharging the storage battery system 102 near 600 min. That is, the balance between the electricity selling profit and the electricity purchase loss can further be increased.

Next, the optimization unit 4 sorts the time indices t in descending order of E(t). For the same E(t), the time t of larger D(t) is ranked high (step S16). The optimization unit 4 accumulates D(t) in the order of sorted t (step S17), and calculates a time tth at which the cumulative value of D(t) exceeds the total discharge amount (charge amount or dischargeable amount) of the storage battery system 102 for the first time (step S18).

That is, the optimization unit 4 specifies the time tth at which the sum of D(t) is equal to or larger than the total discharge amount of the storage battery system 102 in one day when the demand estimated value D(t) is added sequentially from the time t with the high discharge value rate E(t). E(t) at the time tth is defined as Etth. In the example of FIG. 14, tth = 667th min. At this time, E(667) = 33.96 (yen/kWh). That is, the threshold is 33.96 yen/kW. The obtained discharge value rate Etth is output to the optimization unit 4 (step S19). The suffix th represents a threshold.

FIG. 15 is a graph showing an example of discharge on/off control of the storage battery system 102. Discharge execution (discharge on) is represented by 1, and discharge nonexecution (discharge off) is represented by 0. FIG. 15 shows a case in which the threshold of the discharge value to decide discharge on/off is set to 33.96 yen/kW.

In the third embodiment, the calculated Etth is set as the initial value of the provisional solution. When this provisional solution is given to the 3-ary tree, bounding from the initial stage of the algorithm progresses, and the solution can be converged at an early stage. According to the third embodiment, it is therefore possible to reduce the solution search space and largely increase the processing speed.

[Fourth Embodiment]

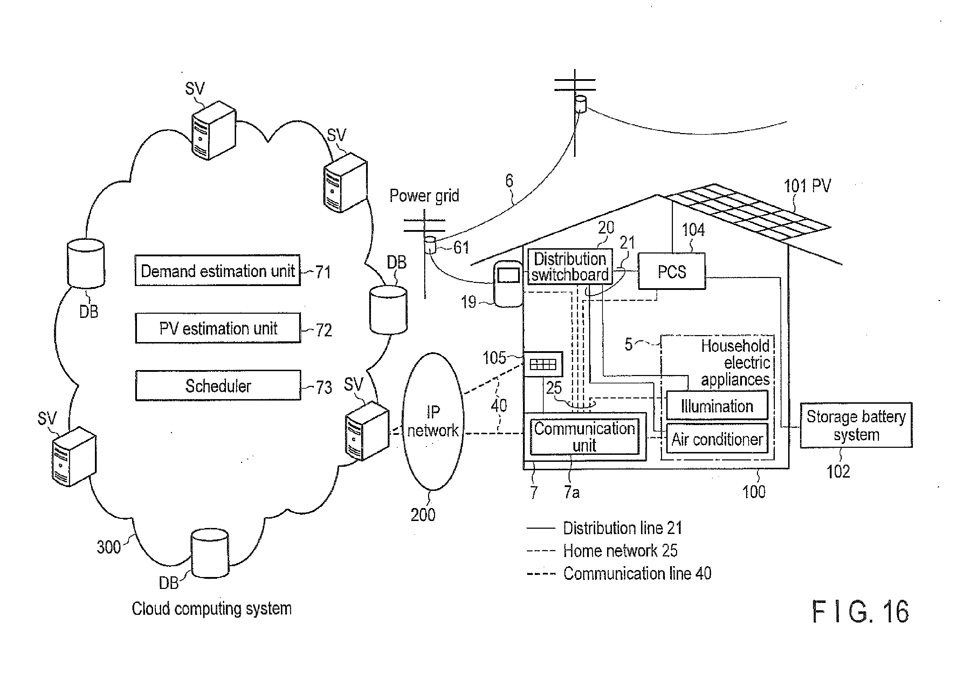

FIG. 16 is a block diagram showing an example of an energy management system according to the fourth embodiment. The same reference numerals as in FIG. 2 denote the same parts in FIG. 16, and only different parts will be described here. In the fourth embodiment, the functions implemented in the first embodiment are implemented by the cooperative operation of a cloud computing system 300 and a home server 7.

The cloud 300 includes a server computer SV and a database DB. The server computer SV can include a single or a plurality of server computers. The databases DB can be either provided in the single server computer SV or distributively arranged for the plurality of server computers SV. The home server 7 can communicate with the server computer SV via an IP network 200 or transmit/receive data to/from a database DB.

In the fourth embodiment, functional objects of the energy management system are arranged in the cloud 300, and the interface between the cloud 300 and the home server 7 is defined. That is, the charge and discharge schedule is created in the cloud 300, and the home server 7 is notified of the charge and discharge schedule via a communication line 40. Information necessary for creation of the charge and discharge schedule is actively acquired by the cloud 300 or sent from the home server 7 to the cloud 300 via the communication line 40.

According to this form, the enormous calculation resources of the cloud computing system can be used. For example, in some cases, PV estimation or demand estimation requires calculations of heavy load. According to the fourth embodiment, however, an estimated value can be calculated accurately in a short time. By using an accurate PV estimated value or demand estimated value, the validity of the charge and discharge schedule can further be increased, as a matter of course.

Hence, according to the fourth embodiment as well, it is possible to provide an energy management system capable of operating a battery device under an advantageous charge and discharge strategy, an energy management method, and a program.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes may be made without departing from the spirit of the inventions. The accompanying claims and their equivalents are intended to cover such forms or modifications as would fall within the scope and spirit of the inventions.

**Claims**

1. An energy management system for managing energy of a customer, including a power generation device configured to generate power derived from renewable energy and a battery device capable of being charged and discharged, **characterized by** comprising:

   an estimation unit configured to estimate a demand of the energy of the customer to obtain a demand estimated value and estimate a power generation amount of the power generation device to obtain a power generation amount estimated value;
   a creation unit configured to create a charge and discharge schedule of the battery device, which is configured to minimize an electricity purchase cost using an push up effect of an electricity selling profit by discharge of the battery device, based on the demand estimated value and the power generation amount estimated value; and
   a control unit configured to control the battery device based on the charge and discharge schedule.

2. The energy management system according to claim 1, **characterized in that** the creation unit comprises:

   a discharge value calculation unit configured to calculate a discharge value that is a value of discharging the battery device for each unit period in a reference period;
   a charge value calculation unit configured to calculate a charge value that is a value of charging the battery device for each unit period;
   a hold value calculation unit configured to calculate a hold value that is a value of holding a state of the battery device for each unit period; and
   an optimization unit configured to calculate a combination of discharge, charge, and hold of the battery device for each unit period, which minimizes the electricity purchase cost, based on the discharge value, the charge value, and the hold value.

3. The energy management system according to claim 2, **characterized in that** the optimization unit
   calculates the electricity purchase cost and an SOC (State Of Charge) of the battery device for all combinations of discharge, charge, and hold of the battery device in the reference period,
   selects a combination that makes the calculated SOC fall between limitations based on specifications of the battery device and minimizes the electricity purchase cost, and
   outputs the charge and discharge schedule based on the selected combination.

4. The energy management system according to claim 2, **characterized in that** the optimization unit
   searches, based on a 3-ary tree algorithm, for the combination of discharge, charge, and hold of the battery device for each unit period, which makes an SOC (State Of Charge) of the battery device fall between limitations based on specifications of the battery device and minimizes the electricity purchase cost, and
   outputs the charge and discharge schedule based on the found combination.

5. The energy management system according to claim 4, **characterized in that** the optimization unit searches for an optimum solution by a branch and bound method based on a given provisional solution.

6. The energy management system according to claim 5, **characterized in that** the provisional solution is a discharge schedule that distributes a discharge amount of the battery device to each unit period in descending order of a discharge value rate that is a value obtained by dividing the charge value by the demand.

7. The energy management system according to claim 1, **characterized by** further comprising a local server provided in the customer and a cloud server connected to the local server via a network,
   the cloud server comprising a notification unit configured to notify the local server of the charge and discharge schedule via the network, the estimation unit, and the creation unit, and
   the local server comprising the control unit, and an interface configured to receive the notified charge and discharge schedule.

8. An energy management method of managing energy of a customer including a power generation device configured to generate power derived from renewable energy and a battery device capable of being charged and discharged, **characterized by** comprising:

estimating a demand of the energy of the customer to obtain a demand estimated value;
estimating a power generation amount of the power generation device to obtain a power generation amount estimated value;
creating a charge and discharge schedule of the battery device, which is configured to minimize an electricity purchase cost using a push up effect of an electricity selling profit by discharge of the battery device, based on the demand estimated value and the power generation amount estimated value; and
controlling the battery device based on the charge and discharge schedule.

9. The energy management method according to claim 8, **characterized by** further comprising:

calculating a discharge value that is a value of discharging the battery device for each unit period in a reference period;
calculating a charge value that is a value of charging the battery device for each unit period;
calculating a hold value that is a value of holding a state of the battery device for each unit period; and
calculating a combination of discharge, charge, and hold of the battery device for each unit period, which minimizes the electricity purchase cost, based on the discharge value, the charge value, and the hold value.

10. The energy management method according to claim 9, **characterized by** further comprising:

calculating the electricity purchase cost and an SOC (State Of Charge) of the battery device for all combinations of discharge, charge, and hold of the battery device in the reference period,
selecting a combination that makes the calculated SOC fall between limitations based on specifications of the battery device and minimizes the electricity purchase cost, and
outputting the charge and discharge schedule based on the selected combination.

11. The energy management method according to claim 9, **characterized by** further comprising:

searching, based on a 3-ary tree algorithm, for the combination of discharge, charge, and hold of the battery device for each unit period, which makes an SOC (State Of Charge) of the battery device fall between limitations based on specifications of the battery device and minimizes the electricity purchase cost, and
outputting the charge and discharge schedule based on the found combination.

12. The energy management method according to claim 11, **characterized by** further comprising searching for an optimum solution by a branch and bound method based on a given provisional solution.

13. The energy management method according to claim 12, **characterized in that** the provisional solution is a discharge schedule that distributes a discharge amount of the battery device to each unit period in descending order of a discharge value rate that is a value obtained by dividing the charge value by the demand.

14. A program including an instruction that causes a computer to execute a method defined in any one of claims 8 to 13.

FIG. 1

Power grid

6

101 PV

104

20 21

Distribution switchboard

PCS

61

Storage battery system

19

102

Household electric appliances

105

Illumination

25

IP network

40

Air conditioner

5

Communication unit

7  7a

100

200

——— Distribution line 21

- - - - Home network 25

- - - - Communication line 40

300

F I G. 2

EP 2 966 610 A1

F I G. 3

F I G. 4

| t(Minute) | 0 | 1 | 2 | 3 | 4 | 5 | 6 | | 1439 |
|---|---|---|---|---|---|---|---|---|---|
| Charge value(yen) | | | | | | | | | |
| Hold value(yen) | | | | | | | | | |
| Charge value(yen) | | | | | | | | | |

Charge and discharge value table 4a

FIG. 5

| t(Minute) | 0 | 1 | 2 | 3 | 4 | 5 | 6 | | 1439 |
|---|---|---|---|---|---|---|---|---|---|
| Charge amount (W) | | | | | | | | | |
| Discharge amount (W) | | | | | | | | | |

Charge and discharge amount table 4b

FIG. 6

FIG. 7

Start

Create all combinations of charge
and discharge sequences (set S) — S1

Calculate cost for each element s of set S — S2

Calculate SOC for each element s — S3

S4
SOC within limitations? — No → Discard — S5
Yes

S6
No ← Processing completed
for all s?
Yes

Select s of minimum cost — S7

Output charge and discharge schedule — S8

End

# F I G. 8

Route

T=1 (c) (d) (n)

T=2 (c) (d) (n)

T=3 (c) (d) (n)

C:Charge

d:Discharge

n:Neither charge nor discharge
   is performed (hold SOC)

FIG. 9

Start

PV estimation→PV(t) ～S11

Demand estimation→D(t) ～S12

Generate schedule that fully charges storage battery system 102 at time Te at which time zone where electricity rate is minimum ends ～S13

Calculate discharge value from Te to time Ts at which time zone where electricity rate is minimum starts → V(t) ～S14

Calculate discharge value rate efficiency E(t) from discharge worth V(t) and demand estimated value D(t) ～S15

Sort t in descending order of E(t) (for same E(t), in descending order of D(t)) ～S16

Accumulate D(t) in order of sorted t ～S17

Calculate time tth at which cumulative value of D(t) exceeds total discharge amount for first time ～S18

Output discharge value rate Etth of tth ～S19

End

F I G. 10

(Yen/kWh)         Electricity rate

28
23
9
0

7:00 11:00    17:00        23:00
Te            (Time)        Ts

## F I G. 11A

Charge amount of storage
(kW)         battery system 102

1hr

5

0
7:00 11:00   17:00        23:00

## F I G. 11B

(W)

3000

1000

0
0    200   400   600   800   1000  1200  1400
Time (indicating "minutes" totaled from 0:00)

PV(t):PV estimated value

## F I G. 12A

F I G. 12B

F I G. 12C

Purchased power

| Time zone | Rate (yen/kWh) |
|---|---|
| 23:00〜7:00 | 9 |
| 7:00〜10:00, 17:00〜23:00 | 23 |
| 10:00〜17:00 | 28 |

F I G. 13A

PV surplus power
purchase price

| Rate (yen/kWh) |
| --- |
| 34 |

# F I G. 13B

(Yen/W)

E(t):Discharge
value rate

Time (indicating "minutes" totaled from 0:00)

# F I G. 14

0:Discharge nonexecution    1:Discharge execution

Time (indicating "minutes" totaled from 0:00)

# F I G. 15

SV

SV

Power grid

6

101 PV

DB

Demand estimation unit — 71

PV estimation unit — 72

Scheduler — 73

DB

DB

SV

DB

SV

IP network

200

Cloud computing system

300

DB

Distribution switchboard

20

21

PCS

104

19

61

105

5

Household electric appliances

25

Illumination

40

Communication unit

Air conditioner

Storage battery system

7   7a

100

102

——— Distribution line 21

- - - Home network 25

-·-·- Communication line 40

F I G. 16

## INTERNATIONAL SEARCH REPORT

| International application No. |
|---|
| PCT/JP2013/084464 |

**A. CLASSIFICATION OF SUBJECT MATTER**

*G06Q50/06*(2012.01)i, *G06Q10/00*(2012.01)i, *H02J3/32*(2006.01)i, *H02J13/00* (2006.01)i

According to International Patent Classification (IPC) or to both national classification and IPC

**B. FIELDS SEARCHED**

Minimum documentation searched (classification system followed by classification symbols)
G06Q50/06, G06Q10/00, H02J3/32, H02J13/00

Documentation searched other than minimum documentation to the extent that such documents are included in the fields searched
Jitsuyo Shinan Koho     1922-1996   Jitsuyo Shinan Toroku Koho   1996-2014
Kokai Jitsuyo Shinan Koho   1971-2014   Toroku Jitsuyo Shinan Koho   1994-2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2011-130618 A  (Panasonic Corp.),<br>30 June 2011 (30.06.2011),<br>entire text; all drawings<br>(Family: none) | 1,8,14<br>2,7,9<br>3-6,10-13 |
| Y<br>A | JP 2012-210073 A  (Sony Corp.),<br>25 October 2012 (25.10.2012),<br>paragraphs [0046], [0072] to [0086]<br>& US 2012/0249056 A1   & EP 2506380 A1<br>& CN 102738851 A | 2,9<br>3-6,10-13 |
| Y | WO 2011/086886 A1  (Panasonic Corp.),<br>21 July 2011 (21.07.2011),<br>paragraphs [0238] to [0240]<br>& US 2012/0072040 A1   & EP 2525470 A1<br>& CN 102349213 A | 7 |

☐ Further documents are listed in the continuation of Box C.     ☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>25 February, 2014 (25.02.14) | Date of mailing of the international search report<br>04 March, 2014 (04.03.14) |
|---|---|
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012255301 A
- JP 2011072166 A

- JP 2011092002 A

**Non-patent literature cited in the description**

- **SHIMADA ; KUROKAWA.** Insolation Forecasting Using Weather Forecast with Weather Change Patterns. *IEEJ Trans. PE,* 2007, vol. 127 (11), 1219-1225